**Europäisches Patentamt**

**European Patent Office**

**Office européen des brevets**

(19)

(11) Veröffentlichungsnummer: **0 250 843 B1**

## EUROPÄISCHE PATENTSCHRIFT

(12)

(45) Veröffentlichungstag der Patentschrift: **21.08.91**

(51) Int. Cl.⁵: **H01H 13/04**, H02B 1/04

(21) Anmeldenummer: **87107446.4**

(22) Anmeldetag: **22.05.87**

(54) Befehlsgerät für den Frontplatteneinbau.

(30) Priorität: **30.06.86 DE 3621946**

(43) Veröffentlichungstag der Anmeldung:
**07.01.88 Patentblatt 88/01**

(45) Bekanntmachung des Hinweises auf die
Patenterteilung:
**21.08.91 Patentblatt 91/34**

(84) Benannte Vertragsstaaten:
**CH DE ES FR GB IT LI**

(56) Entgegenhaltungen:
**DE-C- 1 148 425**
**FR-A- 1 569 564**
**FR-A- 2 217 785**
**US-A- 4 459 448**

(73) Patentinhaber: **Elan Schaltelemente GmbH**
**Hauptstrasse 97**
**W-6301 Wettenberg 1(DE)**

(72) Erfinder: **Willems, Jürgen**
**Karlsruher Strasse 58**
**W-4000 Düsseldorf-Eller(DE)**
Erfinder: **Beyer, Detlev**
**Lübisrather Strasse 58**
**W-4040 Neuss 26(DE)**
Erfinder: **Schöning, Ewald**
**Eichenstrasse 100**
**W-4010 Hilden(DE)**

(74) Vertreter: **Sparing - Röhl - Henseler Patentan-**
**wälte**
**Rethelstrasse 123 Postfach 14 02 68**
**W-4000 Düsseldorf 1(DE)**

## Beschreibung

Die Erfindung betrifft ein Befehlsgerät für den Frontplatteneinbau nach dem Oberbegriff des Anspruchs 1. Ein solches Befehlsgerät ist aus der FR-A- 2 217 785 bekannt.

Bei Geräten für den Frontplatteneinbau werden neben den üblichen Tastfunktionen bei Druck- und Leuchttastern regelmäßig auch Druck- und Leuchtschalter benötigt. Bei letzteren ist es bekannt, eine Schaltkurve, die durch einen federnden Stift abgefahren wird, im Kopfteil des Befehlsgerätes anzuordnen, da dort nur geringe Betätigungs- und Haltekräfte benötigt werden. Bei Industrieschaltgeräten sind jedoch schon durch die notwendigen Kontaktkräfte sowie Erschütterungs- und Schockfestigkeiten deutlich höhere Werte notwendig, wodurch eine Integration der Schaltkurve in den Kopfteil nicht möglich ist.

Aufgabe der Erfindung ist es, ein Befehlsgerät nach dem Oberbegriff des Anspruchs 1 zu schaffen, das neben den notwendigen Kontaktkräften hohe Erschütterungs- und Schockfestigkeiten aufweist.

Diese Aufgabe wird entsprechend dem kennzeichnenden Teil des Anspruchs 1 gelöst.

Die Ankopplung des Kopfteils, das in der Raststellung eingedrückt gehalten werden muß, mit dem Rastelement wird hierbei durch insbesondere zwei zwangsgeführte Federn gelöst, die bei Betätigung der Drucktaste in eine Ausnehmung an einem Fortsatz der Drucktaste eingreifen und den Stößel zur Betätigung des Schalters gedrückt halten. Die Schaltkurve ist insbesondere mittig in dem Befehlsgerät angebracht und wirkt über einen beweglichen Rasthebel mit dem Stößel zusammen. Eine Druckfeder bringt die entsprechende Gegenkraft auf, um die Erschütterungsfestigkeit sowie Lageunabhängigkeit beim Einbau zu gewährleisten.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

Fig. 1 zeigt im Schnitt eine erste Ausführungsform eines Melde- und Bediengerätes im Frontplatteneinbau.

Fig. 2 zeigt eine zweite Ausführungsform im Schnitt.

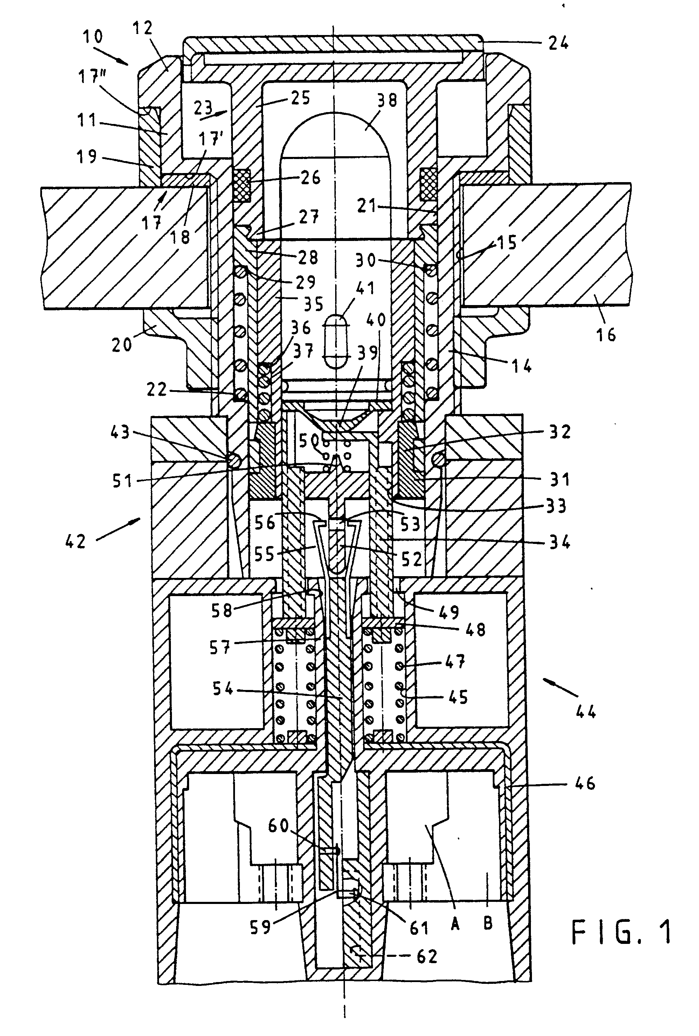

Das in Fig. 1 dargestellte Melde- und Befehlsgerät umfaßt ein Kopfteil 10 mit einer Hülse 11, die einen frontseitigen Kragen 12 und einen mit Außengewinde versehenen Abschnitt 14 mit vermindertem Durchmesser aufweist, der von einer Bohrung 15 einer Frontplatte 16 aufgenommen wird. Die Hülse 11 besitzt eine gestufte Schulter 17 zwischen dem Kragen 12 und dem Abschnitt 14 mit

einem inneren umlaufenden Abschnitt 17', der sich über eine Frontplattendichtung 18 auf der Frontplatte 16 abstützt, und einem äußeren umlaufenden Abschnitt 17'', der sich über einen Frontring 19 frontseitig auf der Frontplatte 16 abstützt, wobei der Frontring 19 die Frontplattendichtung 18 nach außen abdeckt und bündig zu dem Kragen 12 angeordnet ist. Die Hülse 11 wird rückseitig von der Frontplatte 16 durch eine Kontermutter 20 gesichert.

Das Kopfteil 10 ermöglicht auch eine gegenüber der dargestellten vorstehenden Frontplatteneinbauweise versenkte Frontplatteneinbauweise, indem eine Bohrung 15 mit einem Durchmesser oder Quadrat entsprechend dem Außendurchmesser oder Außenquadrat des Abschnitts 17' zusammen mit einem Druckring zwischen Kontermutter 20 und Frontplatte 16, jedoch ohne Frontring 19 und Frontplattendichtung 18 verwendet wird.

Die Bohrung 21 der Hülse 11 besitzt eine Schulter 22 benachbart zum rückwärtigen Ende und nimmt eine Drucktaste 23 auf, die mit einem Deckel 24 versehen ist, der auf die Drucktaste 23 aufgerastet ist. Die Drucktaste 23 und der Deckel 24 bestehen aus gegebenenfalls farbigem, transparentem Kunststoffmaterial. Die Drucktaste 23 besitzt einen rohrförmigen Abschnitt 25, der längsverschieblich in der Bohrung 21 geführt ist. Der Abschnitt 25 besitzt eine umlaufende Nut zur Aufnahme einer Schleifdichtung 26.

Die Drucktaste 23 ist über entsprechende Rastnasen 27 mit einer Innenhülse 28 lösbar verbunden, die eine Schulter 29 gegenüber von der Schulter 22 aufweist. Zwischen den beiden umlaufenden Schultern 22, 29 befindet sich eine Druckfeder 30. Eine Abstützplatte 31 ist über entsprechende Arme 32 mit dem rückwärtigen Ende der Innenhülse 28 verrastet und trägt Durchbrüche 33 für Übertragungs-Kontaktteile 34. Eine hülsenförmige Lampenfassung 35 wird von den Innenhülse 28 aufgenommen und besitzt eine zur Abstützplatte 31 gerichtete Schulter 36, wobei zwischen der Schulter 36 und den Armen 32 der Abstützplatte 31 eine Druckfeder 37 angeordnet ist. Der Innendurchmesser der Innenhülse 28 ist größer als der Innendurchmesser des rohrförmigen Abschnittes 25 der Drucktaste 23, während der Außendurchmesser der Lampenfassung 35 praktisch gleich dem Innendurchmesser der Innenhülse 28 ist, so daß die Lampenfassung 35 durch die Druckfeder 37, die sich an den Armen 32 abstützt, gegen die Rückseite der Drucktaste 23 gedrückt und von letzterer in der Hülse 11 gehalten wird.

Die Lampenfassung 35 nimmt eine Lampe 38 mit einem mittleren Fußkontakt 39 und einem äußeren ringförmigen Fußkontakt 40 auf. Ferner besitzt die Lampe 38 einen an ihrer Seitenwand vorgesehenen Vorsprung 41, der in der Lampenfassung 35 in einer hierfür vorgesehenen im wesentlichen L-förmigen Ausnehmung (nicht dargestellt) abgestützt wird, so daß die Lampe 38 mit ihrem vorderen Teil aus der Lampenfassung 35 herausragend - wie dargestellt - gehalten wird.

Mit dem rückwärtigen Ende der Hülse 11 ist über einen zweiteiligen Halter 42, der mit Hilfe von Federdrähten 43 an der Hülse 11 lösbar befestigt ist, ein Gehäuse 44 gehalten, das zwei sich in Axialrichtung der Hülse 11 erstreckende zylindrische Führungen 45 aufweist, in denen rückseitig Kontaktfahnen 46 münden, die mit den Schraubanschlußklemmen A verschweißt sind, und die Schraubanschlußklemmen A Drahtanschlußöffnungen B aufweisen, die dem Anwender als elektrischer Anschluß dienen, an denen sich Druckfedern 47 elektrisch kontaktierend abstützen, die frontseitig ein Abstützteil 48 tragen, an dem sich die Übertragungs-Kontaktteile 34 rückseitig abstützen, so daß eine Stormversorgung der Kontakte 39, 40 der Lampe 38 gewährleistet ist. Die Führungen 45 besitzen frontseitig verengte Austrittsöffnungen 49 für die Übertragungs-Kontaktteile 34, so daß die Abstützteile 48 nicht unter der Einwirkung der Federn 47 austreten können.

Das den Fußkontakt 39 kontaktierende Übertragungs-Kontaktteil 34 kann zusätzlich durch eine Druckfeder 50, die durch einen Vorsprung 51 an der Abstützplatte 31 zentriert wird, gegen den Fußkontakt 39 gedrückt werden, um eine sicherere Kontaktierung zu gewährleisten. Die Abstützplatte 31 besitzt ferner einen rückwärts gerichteten axialen Fortsatz 52 mit einer Durchtrittsöffnung 53. Ein axialer Stößel 54, der sich unmittelbar an den Fortsatz 52 anschließt, trägt vorderseitig zwei Federn 55 mit hakenförmigen nach innen gerichteten freien Enden 56. Die freie Länge der Federn 55 in Axialrichtung entspricht im wesentlichen dem Abstand der Öffnung 53 vom hinteren Ende des Fortsatzes 52. Der Stößel 54 ist in einer Axialführung 57 angeordnet, die eine trichterförmige Erweiterung 58 benachbart zum vorderen Ende des Stößels 54 aufweist. Das rückwärtige Ende des Stößels 54 ist abgekröpft und trägt drehbar gelagert einen Rasthebel 59, der über einen Niet 60 mit dem abgekröpften Ende des Stößels 54 verbunden ist. Der Rasthebel 59 besitzt einen zweiten Niet 61, der in eine herzförmige Schaltkurve 62 eingreift.

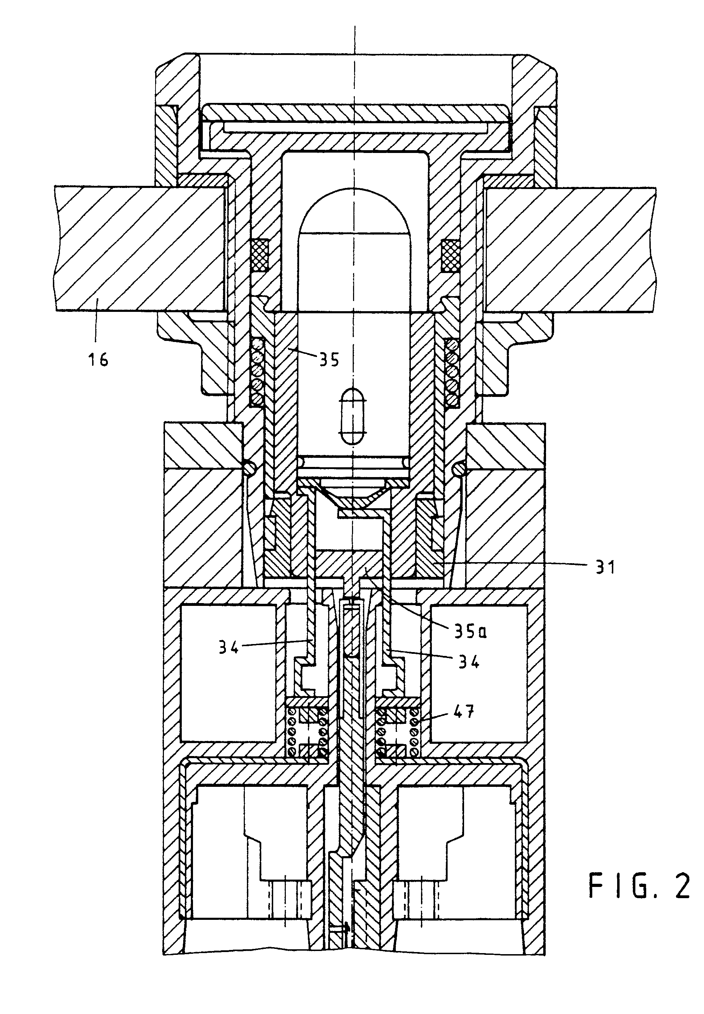

Zur Betätigung eines Druckschalters wird die Drucktaste 23 bezüglich der Hülse 11 einwärts gedrückt (vergleiche auch Fig. 2), wobei der zweite Niet 61 des Rasthebels 59 aus der vorderen Halteposition der Schaltkurve 62 in eine hintere Rastposition in dieser Schaltkurve 62 bewegt wird. Außerdem wird durch das Eindrücken der Drucktaste 23 der Fortsatz 52 in die Axialführung 57 geschoben, so daß die Federn 55 durch die Axialführung 57 und deren Erweiterung 58 in zwangsgeführten Eingriff mit der Öffnung 53 gelangen und auf diese Weise die Drucktaste 23 mit den damit in Eingriff stehenden Teilen in der eingedrückten Stellung zurückhalten. Durch erneutes Drücken der Drucktaste 23 gelangt der zweite Niet 61 aus der Raststellung der Schaltkurve 62, so daß die Druckfeder 30 die Taste 23 und die damit verbundenen Teile in die in Fig. 1 dargestellte Ausgangsposition zurückdrückt. Über den Stößel 54 kann aber auch anstelle eines Druckschalters ein Tastelement betätigt werden, wobei dann der Fortsatz 52 mit dem Stößel 54 einstückig ist und die Federn 55 entfallen.

Der Lampenwechsel erfolgt in der Weise, daß der Deckel 24 von der Drucktaste 23 entfernt und danach die Drucktaste 23 von der Innenhülse 28 abgeklippt wird. Die Druckfeder 37 drückt dann die Lampenfassung 35 in Richtung zur Frontseite aus der Innenhülse 28 heraus, so daß sie sich ohne weiteres aus dem Gerät herausnehmen läßt. Die Auswerfbewegung der Lampenfassung 35 wird zusätzlich unterstützt durch die Druckfedern 47 und 50, die auf die Übertragungs-Kontaktteile 34 in Auswurfrichtung einwirken.

Bei der in Fig. 2 dargestellten Ausführungsform ist das Abstützteil 31 als Ring ausgebildet, das die Lampenfassung 35 aufnimmt, die einen Boden 35a besitzt, der den Fortsatz 52 mit der Öffnung 53 trägt. Die Übertragungs-Kontaktteile 34 sind durch den Boden 35a der Lampenfassung 35 geführt und zur Frontseite hin mittels der Druckfedern 47 vorgespannt. Die Druckfeder 37 ist hierbei entfallen. Im nichteingedrückten Zustand der Drucktaste 23 wird zum Wechseln der Lampe 38 der Deckel 24 und die Taste 23 entfernt, woraufhin die Lampenfassung 35 einschließlich der Lampe 38 und der Übertragungs-Kontaktteile 34 aufgrund der Einwirkung der Druckfedern 47 aus der Innenhülse 28 ausgeworfen wird, so daß sie zum Wechseln der Lampe 38 ergriffen und gänzlich herausgezogen werden kann.

Neben dem Vorteil des einfachen Lampenwechsels hat man auch den Vorteil, daß die Lampe 38 mitläuft, d.h. immer an der gleichen Stelle steht, ob die Drucktaste 23 gedrückt oder nicht gedrückt ist, und somit immer eine gleichmäßige Ausleuchtung der Drucktaste 23 (Kalotte) gewährleistet. Dies ist auch dann der Fall, wenn über die Drucktaste 23 ein Rastschalter oder dergleichen betätigt wird, wie vorstehend beschrieben ist.

## Patentansprüche

1. Befehlsgerät für den Frontplatteneinbau mit einem Kopfteil (10) mit einer in eine Bohrung (15) der Frontplatte einsteckbaren und an der Frontplatte sicherbaren Hülse (11), die eine Drucktaste (23) längsverschieblich geführt und zur Frontseite hin federvorgespannt aufnimmt, sowie mit einem durch die Drucktaste über einen Stößel (54) betätigbaren, mit dem Kopfteil lösbar verbundenen Schalter, wobei der Stößel über eine Schaltkurve zwischen zwei Endstellungen verschiebbar ist, dadurch gekennzeichnet, daß die Drucktaste (23) einen zum Stößel (54) gerichteten Fortsatz (52) aufweist, der Stößel (54) an dem dem Fortsatz (52) benachbarten Ende wenigstens eine Feder (55) trägt, die mit ihrem hakenartigen freien Ende (56) in eine Ausnehmung (53) des Fortsatzes (52) einhakbar ist, und eine Zwangsführung (57) für die Feder (55) zum Einhaken bei gedrückter Drucktaste (23) vorgesehen ist.

2. Befehlsgerät nach Anspruch 1, dadurch gekennzeichnet, daß der Stößel (54) axial mittig zum Kopfteil (10) angeordnet ist und an seinem abgekröpften hinteren Ende einen beweglichen Rasthebel (59) trägt, der mit der axial mittig angeordneten Schaltkurve (62) in Eingriff steht.

3. Befehlsgerät nach Anspruch 1 oder 2, dadurch gekennzeichnet, daß der Fortsatz (52) mit einer Lampenfassung (35) verbunden ist, die in dem Drucktaster (23) angeordnet ist.

4. Befehlsgerät nach Anspruch 3, dadurch gekennzeichnet, daß die Lampenfassung (35) längsverschiebbar in der Hülse (11) geführt und durch die Drucktaste (23), gegen die die Lampenfassung (35) federvorgespannt ist, in der Hülse (11) gehalten ist.

5. Befehlsgerät nach Anspruch 4, dadurch gekennzeichnet, daß benachbart zu der Lampenfassung (35) am rückwärtigen Ende hiervon ein Abstützteil (31) angeordnet ist, an dem sich die die Lampenfassung (35) zur Frontseite hin beaufschlagende Druckfeder (37) abstützt.

6. Befehlsgerät nach Anspruch 5, dadurch gekennzeichnet, daß das Abstützteil (31) ringförmig ist, während die Lampenfassung (35) mit einem Boden (35a) versehen ist, durch den die Übertragungs-Kontaktteile (34) geführt sind.

7. Befehlsgerät nach Anspruch 5, dadurch gekennzeichnet, daß das Abstützteil (31) plattenförmig und die Lampenfassung (35) hülsenförmig sind, wobei die Übertragungs-Kontaktteile (34) durch das Abstützteil (31) geführt sind.

8. Befehlsgerät nach einem der Ansprüche 4 bis 7, dadurch gekennzeichnet, daß die Übertragungs-Kontaktteile (34) in Axialrichtung der Hülse (11) zur Lampe (38) hin federvorgespannt angeordnet sind.

9. Befehlsgerät nach einem der Ansprüche 3 bis 8, dadurch gekennzeichnet, daß mit der Drucktaste (23) eine Innenhülse (28) über eine lösbare Rastverbindung verbunden ist, wobei die Innenhülse (28) die Lampenfassung (35) aufnimmt.

10. Befehlsgerät nach einem der Ansprüche 6 bis 9, dadurch gekennzeichnet, daß das Abstützteil (31) mit der Drucktaste (23) über eine Rastverbindung verbunden ist.

**Claims**

1. Actuator for front panel mounting, with a cap (10) having a sleeve (11) which can be inserted through a boring (15) in the front panel and secured therein, the sleeve accommodating a push button (23) displaceable longitudinally and spring biased forwardly and a switch which can be operated by the push button through a plunger (54) and which is detachably connected to the cap, the plunger being displaceable between two limit positions by means of a control cam, characterised by the fact that the push button (23) has an extension (52) directed towards the plunger (54) and that the plunger (54) is provided at the end adjacent to the extension (52) with at least one spring (55) which can be connected by a hook-shaped free end (56) with a recess (53) in the extension (52), a retaining means (57) for the spring (55) being provided to enable it to be hooked into place when the push button (23) has been pressed.

2. Actuator in accordance with Claim 1, characterised by the fact that the plunger (54) is positioned axially centrally in the cap (10) and is provided at a cranked rear end with a movable latch lever (59) engaging the axially central control cam (62).

3. Actuator in accordance with Claim 1 or 2, characterised by the fact that the extension (52) is connected with a lamp socket (35) located in the push button (23).

4. Actuator in accordance with Claim 3, characterised by the fact that the lamp socket (35) is longitudinally displaceable in the sleeve (11) and is secured in the sleeve (11) by the push button (23), towards which the lamp socket (35) is spring-biased.

5. Actuator in accordance with Claim 4, characterised by the fact that the pressure spring (37) biasing the lamp socket (35) towards the front bears against a support (31) adjacent to the lamp socket (35) and at the rear end thereof.

6. Actuator in accordance with Claim 5, characterised by the fact that the support part (31) is annular while the lamp socket (35) is provided with a base (35a) through which electrical contact parts (34) pass.

7. Actuator in accordance with Claim 5, characterised by the fact that the support part (31) is plate-shaped and the lamp socket (35) sleeve-shaped, the electrical contact parts (34) passing through the support part (31).

8. Actuator in accordance with one of Claims 4 to 7, characterised by the fact that the electrical contact parts (34) are spring-biased, in the axial direction of the sleeve (11), towards the lamp (38).

9. Actuator in accordance with one of Claims 3 to 8, characterised by the fact that an inner sleeve (28) is connected to the push button (23) via a releasable locking latch while the inner sleeve (28) accommodates the lamp socket (35).

10. Actuator in accordance with one of Claims 6 to 9, characterised by the fact that the support part (31) is connected to the push button (23) via a locking latch.

**Revendications**

1. Dispositif de transmission d'ordres, pour montage en panneau avant (10), avec une tête (10), un manchon (11) enfichable dans un alésage (15) du panneau avant et fixable sur le panneau avant, qui reçoit un bouton-poussoir (23) guidé longitudinalement et précontraint, grâce à un ressort, par rapport au panneau avant, ainsi qu'un interrupteur, actionnable au moyen du bouton-poussoir, par l'intermédiaire d'un poussoir (54), et relié de façon amovible à la tête, le poussoir étant déplaçable entre deux positions finales par l'intermédiaire d'une came de commutation, caractérisé en ce que le bouton-poussoir (23) présente un prolongement (52) orienté vers le poussoir (54), le poussoir (54) portant, à l'extrémité voisine du prolongement (52), au moins un ressort (55), pouvant s'accrocher par son extrémité libre en forme de crochet (56) dans un évidement (53) du prolongement (52), un guidage forcé (57) étant prévu pour le ressort (55), en vue d'un accrochage lorsque le bouton-poussoir (23) est pressé.

2. Dispositif de transmission d'ordres selon la revendication 1, caractérisé en ce que le poussoir (54) est disposé de façon axialement centrée par rapport à la tête (10) et porte à son extrémité arrière recourbée un levier d'encliquetage mobile (59) qui vient en contact avec la came de commutation (62) disposée de façon axialement centrée.

3. Dispositif de transmission d'ordres selon la revendication 1 ou 2, caractérisé en ce que le prolongement (52) est relié à une douille à lampe (35) disposée dans le bouton-poussoir (23).

4. Dispositif de transmission d'ordres selon la revendication 3, caractérisé en ce que la douille à lampe (35) est guidée de façon déplaçable longitudinalement dans le manchon (11) et est maintenue dans cet dernier au moyen du bouton-poussoir (23) vis-à-vis duquel la douille à lampe (35) est précontrainte par un ressort.

5. Dispositif de transmission d'ordres selon la revendication 4, caractérisé en ce qu'une partie d'appui, (31) sur laquelle prend appui le ressort de pression (37) sollicitant la douille à lampe (35) vers la face avant, est disposée au voisinage de la douille à lampe (35), à l'extrémité arrière de celle-ci.

6. Dispositif de transmission d'ordres selon la revendication 5, caractérisé en ce que la partie d'appui (31) est de forme annulaire, tandis que la douille à lampe (35) est pourvue d'un fond (35a) au travers duquel sont passées les parties de contact de transmission (34).

7. Dispositif de transmission d'ordres selon la revendication 5, caractérisé en ce que la partie d'appui (31) est en forme de plaque et la douille à lampe (35) est en forme de manchon, les parties de contact de transmission (34) étant passés au travers de la partie d'appui (31).

8. Dispositif de transmission d'ordres selon l'une des revendications 4 à 7, caractérisé en ce que les parties de contact de transmission (34) sont disposées de façon précontrainte par un ressort, en direction axiale du manchon (11), vis-à-vis de la lampe (38).

9. Dispositif de transmission d'ordres selon l'une des revendications 3 à 8, caractérisé en ce qu'un manchon intérieur (28) est relié, par l'intermédiaire d'une liaison à encliquetage désolidarisable, au bouton-poussoir (23), le manchon intérieur (28) recevant la douille à lampe (35).

10. Dispositif de transmission d'ordres selon l'une des revendications 6 à 9, caractérisé en ce que la partie d'appui (31) est reliée au bouton-poussoir (23) par l'intermédiaire d'une liaison à encliquetage.

FIG. 1

FIG. 2